# EUROPEAN PATENT APPLICATION

(11) **EP 2 465 662 A2**
(43) Date of publication of application: **20.06.2012**
(21) Application number: 11193956.7
(22) Date of filing: 16.12.2011
(51) Int. Cl.: B29C 49/20, B29C 51/12, B29L 22/00

(54) **Method for coupling built-in components to each other in hollow container**

(30) Priority: 17.12.2010 JP 2010281656
(71) Applicant: Yachiyo Industry Co., Ltd., Sayama-shi Saitama 350-1335 (JP)
(72) Inventor: Watanabe, Takatoshi, Tochigi, 329-1334 (JP); Tabuchi, Naoya, Tochigi, 329-1334 (JP); Ohtaki, Kazuhiro, Tochigi, 329-1334 (JP)
(74) Representative: Rupp, Christian

(57) **Abstract**

The present invention provides a method for coupling built-in components (2,3) in a hollow container, comprising: a hollow container (1) forming step of forming the hollow container, the hollow container forming step including securing the built-in components to parisons (P) transferred onto mold pieces (11) and closing the mold pieces with the built-in components in a pre-in the pre-coupled state state; and a built-in components coupling step of coupling the built-in components, the built-in components coupling step including pressing an outer surface of the hollow container to displace the hollow container while cooling the hollow container after removing the hollow container from the mold pieces.

## Description

### CROSS-REFERENCE TO RELATED APPLICATION

This application claims the foreign priority benefit under 35 U.S.C § 119 of Japanese Patent Application No. 2010-281656 filed on December 17,2010 in the Japan Patent Office, the disclosure of which is incorporated herein by reference in its entirety.

### BACKGROUND OF THE INVENTION

### 1. Field of the Invention

The present invention relates to a method for coupling built-in components to each other in a resin-made hollow container such as a vehicle fuel tank.

### 2. Description of the Invention

A vehicle fuel tank includes various built-in components associated with the tank such as components related to a valve and a pump, components for ensuring the strength of a tank body, and components for restraining rippling of the fuel surface in the fuel tank. For securing such built-in components to an inner wall of the tank body, it is preferable to secure them during a step of manufacturing the tank body rather than after completion of the tank body when considering the labor or the like involved in operations for incorporating the built-in components into the completed tank body.

Examples of conventional methods of securing such components during the step of manufacturing the tank body include a method disclosed in JP 2009-542480. JP 2009-542480 describes a technique of actuating an air cylinder in a center frame that is sandwiched between mold pieces in opposite positions for pressing a pair of built-in components respectively against parisons (two shells) transferred onto the mold pieces and thereby securing the built-in components respectively to the parisons. JP 2009-542480 also describes a technique of coupling the opposed built-in components when closing the mold pieces.

According to the technique of JP 2009-542480 of coupling the built-in components when closing the mold pieces, however, in some cases, it may be difficult to keep accurately the two built-in components in the intended relative positions when coupling them because those parions, immediately after transferred onto the mold pieces, have a high fluidity due to a heat of the mold pieces. For example, when the built-in components collide with each other because of axial displacement of the built-in components when these built-in components are coupled, irregularities may occur around the areas of the parisons in which the built-in components are embedded even if a collision force is small. As a result, the built-in components maybe inclined, and consequently, a layered structure (in general, made of a plurality of materials and a plurality of layers in the case of a fuel tank) of the parions may be disturbed.

The present invention has been made to solve the above drawback. It is an object of the present invention to provide a method for coupling built-in components in a hollow container, which can realize a reduction in irregularities around areas of a wall of the container in which the built-in components are embedded, and a reduction in inclination of the built-in components.

### SUMMARY OF THE INVENTION

In one aspect of the present invention, there is provided a method for coupling built-in components in a hollow container, comprising: a hollow container forming step of forming the hollow container, the hollow container forming step including securing the built-in components to parisons transferred onto mold pieces and closing the mold pieces with the built-in components in a pre-in the pre-coupled state state; and a built-in components coupling step of coupling the built-in components, the built-in components coupling step including pressing an outer surface of the hollow container to displace the hollow container while cooling the hollow container after removing the hollow container from the mold pieces.

According to the method of the present invention, the built-in components are secured in the pre-coupled state to the parisons that have a relatively high fluidity due to the heat of the mold pieces. Accordingly, irregularities of the parions and inclination of the built-in components that are otherwise caused by collision at the time of coupling of the built-in components do not occur. The built-in components are coupled while the hollow container is being cooled by the air or the like after being removed from the mold pieces. Thus, even if the built-in components collide with each other at the time of coupling thereof, irregularities hardly occur to the wall of the hollow container because of a reduced fluidity of the wall of the container and as a result, the built-in components can be secured stably to the hollow container.

The method according to the present invention may be constituted in such a manner that in the built-in components coupling step, a correction jig is prepared, the correction jig including a lower jig and a upper jig, the lower jig being for placing the hollow container thereon, the upper jig being movable up and down and having a pressing portion for pressing the outer surface of the hollow container,
the built-in components coupling step further including: placing the hollow container on the lower jig with the built-in components located at an upper surface part and a lower surface part of the hollow container; and
then bringing the upper jig and the lower jig into proximity with each other to cause the pressing portions to press only an area of the upper surface part of the hollow container for correcting the hollow container, the upper surface part area being a bearing surface to which the built-in component is secured and a surrounding area thereof.

The method of the present invention allows the correction jig to have a simple structure. Accordingly, costs for correcting the hollow container can be reduced. Further, for coupling the built-in components, the pressing portion presses only the area of the upper surface part of the hollow container that is a bearing surface to which the built-in component is secured and a surrounding area thereof. Thus, the hollow container only needs to be corrected and deformed to a minimum degree. Further, since only the limited area is corrected and deformed, it is easy to grasp the variations in the amount of deformation due to correction. As a result, it is easy to adjust the amount of deformation due to correction.

Further, the method according to the present invention may be constituted in such a manner that a pair of tubes are coupled for communication with each other when the built-in components are coupled during the built-in components coupling step.

According to the method of the present invention, the pair of tubes can be coupled for communication with each other by coupling the built-in components.

### BRIEF DESCRIPTION OF THE DRAWINGS

FIGs. 1A-1G are schematic diagrams showing a hollow container forming step, the hollow container shown from the side.
FIGs. 2A-2C are schematic diagrams showing a built-in components coupling step, the hollow container shown from the side.
FIG. 3 is a side view of a part of the hollow container with the built-in components in the coupled state according to a first embodiment.
FIG. 4 is a perspective view of outer appearances of the built-in components according to the first embodiment.
FIGs. 5A-5D are side views of the entirety of the hollow container with the built-in components in the coupled state according to a second embodiment to a fifth embodiment.
FIGs. 6A and 6B are side views of parts of the hollow container with the built-in components, which are in the pre-coupled state and in the coupled state, respectively, according to the second embodiment.
FIGs. 7A and 7B are side views of parts of the hollow container with the built-in components, which are in the pre-coupled state and in the coupled state, respectively, according to the third embodiment.
FIGs. 8A and 8B are side views of parts of the hollow container with the built-in components, which are in the pre-coupled state and in the coupled state, respectively, according to the fifth embodiment.
FIGs. 9A and 9B are side views of parts of the hollow container with the built-in components, which are in the pre-coupled state and in the coupled state, respectively, according to a sixth embodiment.
FIGs. 10A and 10B are side views of parts of the hollow container with the built-in components, which are in the pre-coupled state and in the coupled state, respectively, according to a seventh embodiment.

### DETAILED DESCRIPTION OF THE PREFERRED EMBODIMENTS

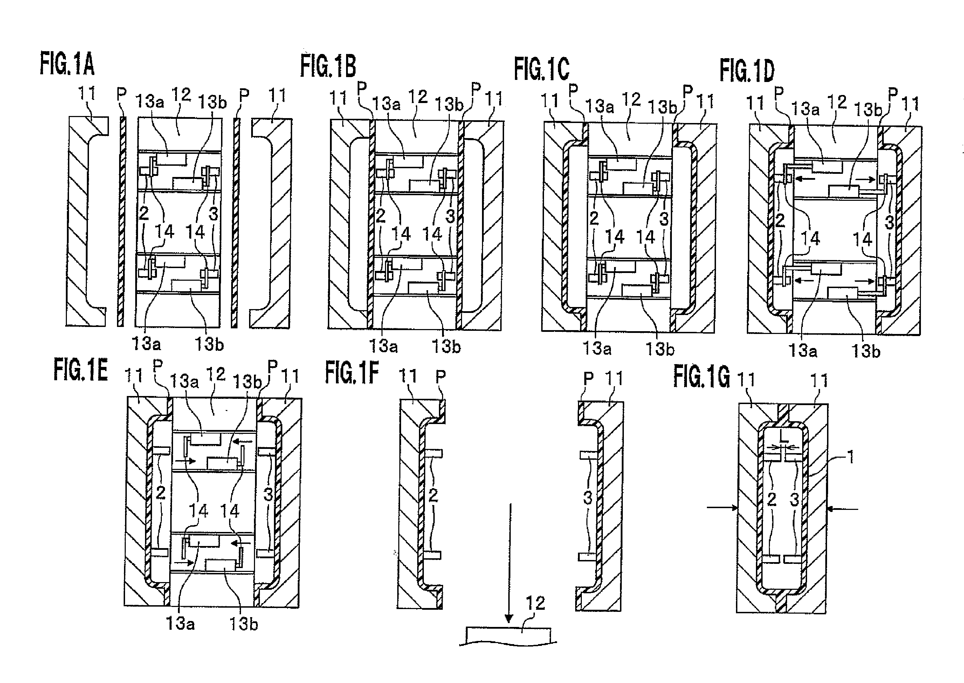

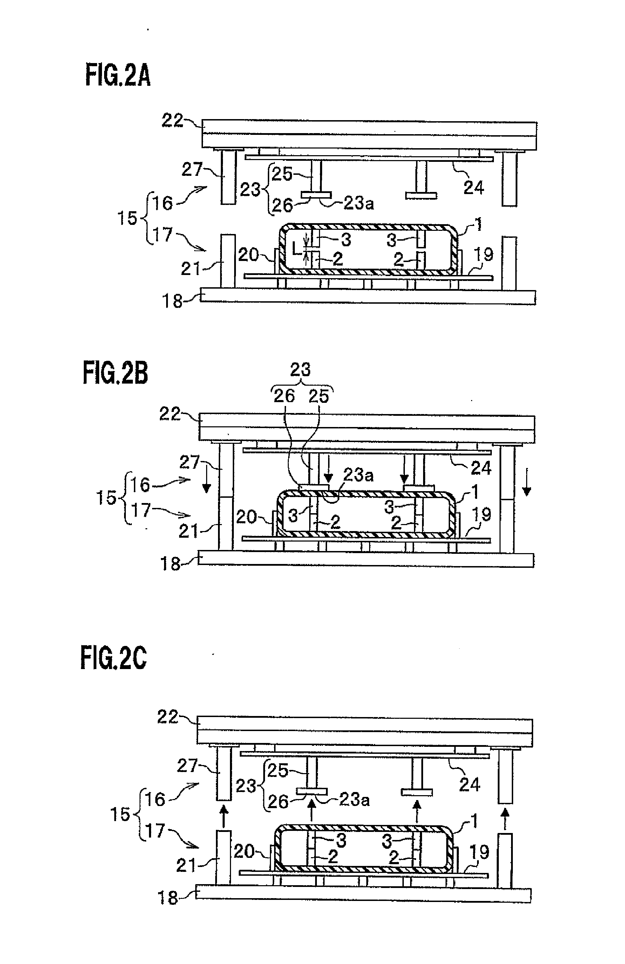

A method for coupling built-in components in a hollow container according to the present invention comprises a hollow container forming step of forming a hollow container shown in FIGs. 1A-1G and a built-in components coupling step of coupling the built-in components shown in FIGs. 2A-2C. The hollow container intended in the present invention is, for example, a blow molded article such as a vehicle fuel tank or the like. The hollow container forming step shown in FIGs. 1A-1G is a step of forming a blow molded article.

### < Hollow Container Forming Step>

The hollow container forming step shown in FIGs. 1A-1G includes securing built-in components (in this case, first built-in components 2 and second built-in components 3) to parisons P,P transferred onto mold pieces 11,11; and closing the mold pieces 11,11 with each of the first built-in components 2 and a corresponding one of the second built-in components 3 in the pre-coupled state, thereby forming a hollow container 1.

In the case where the hollow container 1 is a vehicle fuel tank, examples of materials of the first built-in components 2 and the second built-in components 3 include, for example, POM (polyacetal resin). The parisons P,P each have a sectional multilayered structure in which a barrier layer made of a material with a high impermeability to fuel is sandwiched between at least a thermoplastic resin inner layer and a thermoplastic resin outer layer. Herein, the thermoplastic resin inner layer constitutes an inner surface of the tank and the thermoplastic resin outer layer constitutes an outer surface thereof. The thermoplastic resin inner layer and the thermoplastic resin outer layer are each made of, for example, PE (high-density polyethylene) excellent in heat fusion and molding properties.

FIG. 1A shows a state in which the blow mold pieces 11,11 are opened and a center frame 12 is positioned between the opened mold pieces 11,11, with a pair of plate-like first and second parisons P,P each hung between the respective mold pieces 11,11 and the center frame 12. The center frame 12 is provided with two cylinders 13a and two cylinders 13b. The two cylinders 13a serve as actuators for securing the two first built-in components 2 to the first parison P. The two cylinders 13b serve as actuators for securing the two second built-in components 3 to the second parison P. The cylinders 13a and 13b have rods, respectively, that are provided with releasable holding mechanisms 14 at top ends thereof, respectively. The clamp mechanisms 14 of the cylinders 13a hold the built-in components 2, whereas the clamp mechanisms 14 of the cylinders 13b hold the built-in components 3. In FIG. 1A, the rods of the cylinders 13a and 13b are in the retracted state. Detailed description of the clamp mechanism 14 is omitted since it is irrelevant to an understanding of the present invention.

FIG. 1B shows a state the mold pieces 11,11 are moved from the state shown FIG. 1A to be closed with the center frame 12 sandwiched therebetween, and sealed spaces are formed between the mold surfaces and the parisons P,P by sealingly attaching the mold surfaces of the mold pieces 11,11 to the parisons P,P. By drawing a vaccuum in those spaces from the mold surface sides of the closed mold 11, the parisons P,P are transferred onto the mold surfaces of the mold pieces 11,11 as shown in FIG. 1C.

Next, as shown in FIG. 1D, the rods of the cylinders 13a and 13b are advanced horizontally by a predetermined length so that the base ends of the first built-in components 2 and the second built-in components 3 are pressed against the parisons P,P and embedded therein to a predetermined depth. Then, the first built-in components 2 and the second built-in components 3 are released by the clamp mechanisms 14. After that, the rods of the cylinders 13a and 13b are retracted as shown in FIG. IE. Then, as shown in FIG. 1F, the mold pieces 11,11 are opened, and the center frame 12 is withdrawn from between the mold pieces 11,11. Next, as shown in FIG. 1G, the mold pieces 11,11 are closed again to define a cavity inside them. Then, air is blown into the cavity to transform the parisons P,P into a hollow container 1.

In the case where the hollow container 1 has a flat shape as that of a vehicle fuel tank, the hollow container 1 is positioned with flat planes thereof vertically extending when it is formed by using the mold pieces 11,11. Thus, it is possible that the first built-in components 2 are secured to one flat plane of the hollow container 1 and the second built-in components 3 are secured to the other flat plane thereof. As is clear from FIG. 1G, in contrast to a predetermined coupled state thereof, the first built-in components 2 and the second built-in components 3 are left in the pre-coupled state with a gap L formed therebetween during the hollow container forming step after closing the mold pieces 11,11. This pre-coupled state of the first built-in components 2 and the second built-in components 3 continues until the next step of coupling the built-in components is finished after the mold pieces 11,11 are opened and the hollow container 1 is removed from between the opened mold pieces 11,11.

### < Built-in Components Coupling Step>

The built-in components coupling step shown in FIGs. 2A-2C is a step of coupling, when the hollow container 1 removed from the mold pieces 11,11 (FIGs. 1A-1G) is allowed to cool, each of the first built-in components 2 and a corresponding one of the second built-in components 3 by pressing the outer surface of the hollow container 1 to deform hollow container 1. In FIGs. 2A-2C, illustrations of pinch-off portions of the hollow container are omitted.

The hollow container 1 removed from the mold pieces 11,11 shown in FIGs. 1A-1G is transferred into a correction jig 15 shown in FIGs. 2A-2C. The hollow container 1 may be transferred from the mold pieces 11,11 into the correction jig 15, either totally automatically, for example, by means of a robot, a conveyor or the like, or manually. The hollow container 1 soon after removed from the mold pieces 11,11 and formed has a surface temperature ranging from approximately 80°C to approximately 120°C. This means that in the case where the hollow container 1 is transferred manually, an operator needs to wear work gloves in handling the hollow container 1.

There is no particular limitation on the structure of the correction jig 15 as long as it has a function of correcting the hollow container 1 by pressing the outer surface of the hollow container 1 and thereby coupling each of the first built-in components 2 and a corresponding one of the second built-in components 3. The correction jig 15 shown in FIGs. 2A-2C is constituted of a movable upper jig 16 that can move up and down and a fixed lower jig 17. The lower jig 17 includes a fixed base 18 and a mount 19 provided thereon. The mount 19 is for placing the hollow container 1 thereon. In the case where the hollow container 1 has a flat shape as that of a vehicle fuel tank, the hollow container 1 is placed on the mount 19 with the flat planes thereof extending horizontally. FIGs. 2A-2C shows an embodiment in which the hollow container 1 is placed on the mount 19 in such a manner that one flat plane of the hollow container 1 with the first built-in components 2 serves as a lower surface part and abuts on the mount 19 whereas the other flat plane thereof with the second built-in components 3 serves as an upper surface part. The mount 19 is properly provided with a pair of upstanding guide walls 20 opposed to the inner side walls of the hollow container 1. The pair of upstanding guide walls 20 are for positioning the hollow container 1. Further, the fixed base 18 is provided with stoppers 21 for determining the lowest position to which the upper jig 16 is allowed to move down.

On the other hand, the upper jig 16 includes a movable base 22 and pressing portions 23. The movable base 22 is moved up and down by an actuator such as a cylinder, not shown. The pressing portions 23 are provided at a lower surface of the movable base 22. The pressing portions 23 press the upper surface part of the hollow container 1 toward the lower surface part thereof when the movable base 22 is moved down for coupling each of the second built-in components 3 to a corresponding one of the first built-in components 2. The pressing portions 23 each are formed with a horizontal pressing surface 23a. The pressing surfaces 23a press only local areas of the upper surface part of the hollow container 1, more specifically, only areas that are bearing surfaces to which the second built-in components 3 are secured and surrounding areas thereof. FIGs. 2A-2C shows an embodiment in which a horizontally extending support plate 24 is attached to the lower surface of the movable base 22 and the pressing portions 23 are attached to the lower surface of the support plate 24. Each of the pressing portions 23 includes a vertically extending pressing pillar 25 and a horizontally extending pressing plate 26. The pillars 25 are attached to the lower surface of the support plate 24. The pressing plates 26 are attached to the lower ends of the pressing pillars 25, respectively. The lower surface of the pressing plate 26 constitutes the pressing surface 23a. An adjustment shim plate (not shown) is interposed, for example, between the support plate 24 and the pressing pillars 25. The adjustment shim plate is for adjusting the pressure to be applied by the pressing surface 23a to the upper surface part of the hollow container 1. Further, the movable base 22 is provided with stoppers 27 that abut on the stoppers 21.

There will be described one example of the built-in components coupling step that uses the correction jig 15. The hollow container 1 such as a fuel tank, removed from the mold pieces 11,11 (FIGs. 1A-1G) and having a surface temperature ranging from approximately 80°C to approximately 120°C, is placed on the mount 19 of the lower jig 17, with the upper jig 16 lifted up, as shown in FIG. 2A. In this state, each of the first built-in components 2 and a corresponding one of the second built-in components 3 are in the pre-coupled state, with the gap L formed therebetween. Then, as shown in FIG. 2B, the upper jig 16 is moved down until the stoppers 21 and the stoppers 27 abut on each other. The pressing plates 26 press only the local areas of the upper surface part of the hollow container 1, more specifically, only the areas that are the bearing surfaces to which the second built-in components 3 are secured and surrounding areas thereof. Those pressed areas that are the bearing surfaces and the surrounding areas thereof are corrected and deformed to be displaced downward by a pressing force from the pressing plates 26. The downward displacement reduces the gap L to approximately zero, and thus, the first built-in components 2 and the second built-in components 3 are brought into the predetermined coupled state.

In the present embodiment, the cooling in the built-in components coupling step is, for example, natural cooling in an ambient air. Here, the hollow container 1 being corrected by the pressing portions 23 has still a surface temperature ranging from approximately 80°C to approximately 120°C. This allows the outer shape of the hollow container 1 of a thermoplastic resin material to be sufficiently corrected and deformed. The duration for the upper jig 16 to stay at the lowest position, that is, the duration for the pressing plates 26 at the lowest position to keep pressing the upper surface part of the hollow container 1, is set properly for ensuring completion of the deformation due to correction of the outer shape of the hollow container 1 made of a thermoplastic resin material. In other words, the pressing plates 26 keep pressing until the deformation due to correction is fmished to such a degree that there is no spring back occurring at those pressed areas that are the bearing surfaces and the surrounding areas thereof, and to such a degree that the firmly coupled state of the first built-in components 2 and the second built-in components 3 is ensured.

In some cases, by carrying out a treatment such as blowing a cooling air to the hollow container 1 when the pressing plates 26 at the lowest position is pressing the upper surface part of the hollow container 1, the cooling of the hollow container is accelerated to shorten the time required for completing the deformation of the areas to be corrected. As a result, the duration for the upper jig 16 to stay at the lowest position is shortened. Consequently, the time required for the built-in components coupling step is reduced. The blowing of a cooling air to the hollow container 1 may be started before the correction of the hollow container 1 shown in FIG. 2A.

Then, after the lapse of the duration for the upper jig 16 to stay at the lowest position, the upper jig 16 is lifted up as shown in FIG. 2C and the hollow container 1 is removed from the mount 19 and transferred for the next step. In the corrected hollow container 1, those pressed areas that are the bearing surfaces to which the second built-in components 3 are secured and the surrounding areas thereof are displaced inwardly of the hollow container 1 relative to their initial state by the length approximately equal to the gap L.

As has been described above, in the present invention, first, during the hollow container forming step of forming the hollow container, the hollow container 1 is formed by using the mold pieces 11,11, with the first built-in components 2 and the second built-in components 3 in the pre-coupled state. The parisons P,P transferred onto the mold pieces 11,11 have a relatively high fluidity due to the heat from the mold pieces 11,11. If the first built-in components 2 and the second built-in components 3 are to be coupled in this state as with the conventional technique, when the first built-in components 2 and the second built-in components 3 collide with each other, there is a risk that irregularities may occur around the areas of the parisons P,P in which the first built-in components 2 and the second built-in components 3 are embedded. As a result, the first built-in components 2 and the second built-in components 3 may be inclined, even if the collision force is small. In contrast, in the present invention, during the hollow container forming step of forming the hollow container 1 by using the mold pieces 11,11, the first built-in components 2 and the second built-in components 3 are in the pre-coupled state. Consequently, there are less possibilities to cause problems of irregularities in the parions P,P and inclination of the first built-in components 2 and the second built-in components 3.

In the hollow container 1 removed from the mold pieces 11,11, the fluidity of the wall is reduced when the hollow container 1 is exposed to the air and allowed to cool. According to the present invention, the first built-in components 2 and the second built-in components 3 are coupled when the hollow container is being allowed to cool. Thus, even if the first built-in components 2 and the second built-in components 3 collide at the time of coupling thereof, irregularities hardly occur to the wall of the hollow container 1 because the wall of the hollow container 1 has a reduced fluidity. As a result, the first built-in components 2 and the second built-in components 3 are coupled stably.

In the present embodiment, the built-in components coupling step, by using the correction jig 15 having the upper jig 16 and the lower jig 17 is as follows. First, the hollow container 1 is placed on the lower jig 17 (the mount 19) with the second built-in components 3 located at the upper surface part of the hollow container 1 and with the first built-in components 2 located at the lower surface part thereof. Then, the upper jig 16 and the lower jig 17 are brought into proximity with each other. More specifically, the upper jig 16 is moved down to cause the pressing portions 23 to press only the local areas of the upper surface part of the hollow container 1, more specifically, only the areas that are the bearing surfaces to which the second built-in components 3 are secured and the surrounding areas thereof. By the pressing portions 23 pressing those areas, the hollow container 1 is corrected to couple the first built-in components 2 and the second built-in components 3. According to the present embodiment, the correction jig 15 has a simple structure, and thus, costs for correcting the hollow container 1 can be reduced. Further, for coupling the first built-in components 2 and the second built-in components 3, the pressing portions 23 press only the local areas of the upper surface part of the hollow container 1, more specifically, only the areas that are the bearing surfaces to which the second built-in components 3 are secured and the surrounding areas thereof. Thus, the hollow container 1 only needs to be corrected and deformed to a minimum degree. Since only the limited areas are corrected and deformed, it is easy to grasp the variations in the amount of deformation due to correction. This also facilitates adjustment of the amount of deformation due to correction by the adjustment shim plate or the like.

### <Embodiments of First Built-in Component 2 and Second Built-in Component 3>

Next, description will be made of a plurality of embodiments of the first built-in component 2 and the second built-in component 3 when the hollow container 1 is a vehicle fuel tank T.

### <First Embodiment>

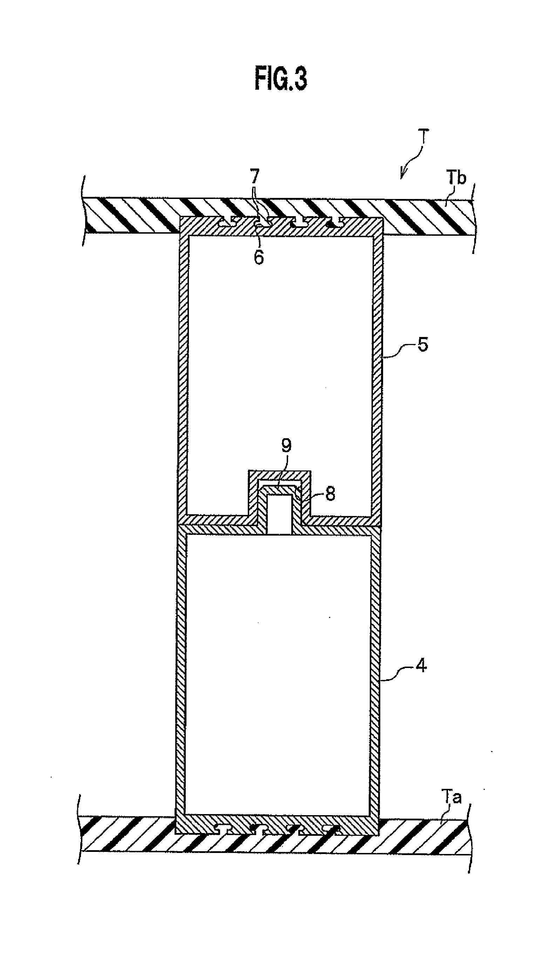

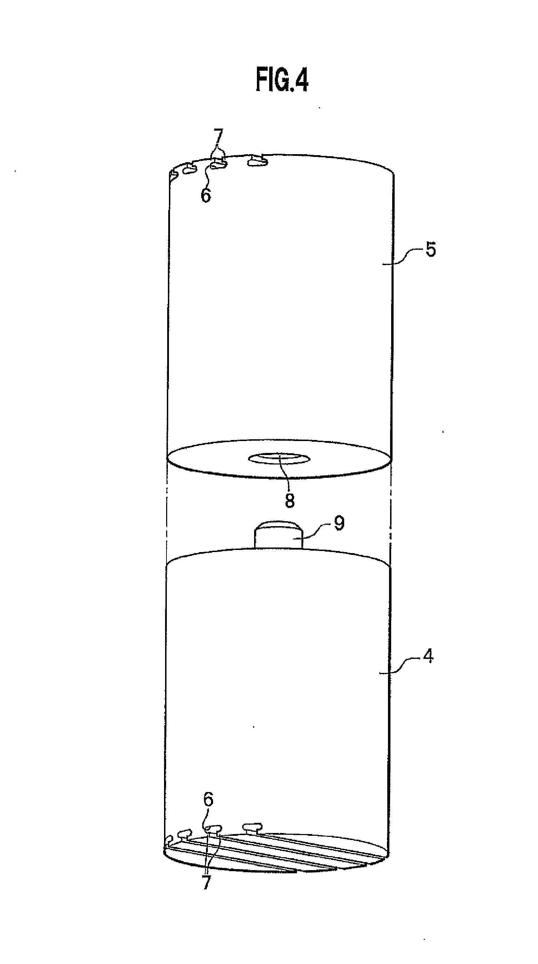

The first built-in component 2 and the second built-in component 3 shown in FIGs. 3 and 4 are constituted of a first support 4 and a second support 5, respectively. The first support 4 and the second support 5 are coupled to erect vertically across the distance between a lower surface part Ta and an upper surface part Tb of the fuel tank T. The first support 4 and the second support 5 function to prevent shrink deformation of the fuel tank T. The first support 4 and the second support 5 each may have, for example, a cylindrical shape, and may be a hollow member or a solid member.

The first support 4 and the second support 5 have base end surfaces to be embedded in the lower surface part Ta and the upper surface part Tb of the fuel tank T. The base end surface of each of the first support 4 and the second support 5 is formed with a pair of hook portions 7. The hook portions 7 have hook tips opposed to each other to form a resin inflow groove 6 with a narrow entrance. Shown in FIGs. 3 and 4 is an embodiment in which the pair of hook portions 7 comprises four pairs of hook portions 7 arranged in parallel to each other to form four resin inflow grooves 6. Each hook portion 7 has a linear cross section. In the hollow container forming step of forming the hollow container 1 shown in FIGs. 1A-1G, when the rods of the cylinders 13a and 13b move forward to press the base ends of the first support 4 and the second support 5 against the parisons P,P, part of the parisons P,P flows into the resin inflow grooves 6. As a result, the first support 4 and the second support 5 are firmly fixed to the parisons P,P (that is, the lower surface part Ta and the upper surface part Tb) because of a mechanical coupling force applied by the pair of hook portions 7.

On the other hand, the top ends of the first support 4 and the second support 5 are provided with a coupling means. The coupling means is constituted of, for example, a projection and a recess. The projection is formed on either one of the first support 4 and the second support 5 and the recess is formed in the other of the first support 4 and the second support 5. The projection fits in the recess. FIGs. 3 and 4 show an embodiment in which a circular coupling hole 8 serving as the recess and a columnar coupling protrusion 9 are formed. The circular coupling hole 8 is formed in the center of the top end surface of the second support 5. The columnar coupling protrusion 9 is formed in the center of the top end surface of the first support 4. The columnar coupling protrusion 9 fits in the coupling hole 8. When the hollow container forming step of forming the hollow container is finished, part of the top end of the coupling protrusion 9 is inside the coupling hole 8, although the top end surfaces of the first support 4 and the second support 5 are spaced apart from each other by the gap L shown in FIGs. 1A-1G and thus are in the pre-coupled state. By correcting the fuel tank T in the built-in components coupling step, the top end surfaces of the first support 4 and the second support 5 make an approximately face-to-face contact with each other to reduce the gap L to approximately zero. Thus, the coupling protrusion 9 completely fits in the coupling hole 8, so that the first support 4 and the second support 5 are coupled. As a result, the first support 4 and the second support 5 serve as one firm support to support the lower surface part Ta and the upper surface part Tb of the fuel tank T. The value of the gap L is properly set.

In the present invention, the "coupled state" of the first built-in components 2 and the second built-in components 3 refers to a state that allows the function the first built-in components 2 and the second built-in components 3 to be performed only after the first built-in components 2 and the second built-in components 3 are coupled to serve as an integral unit. For example, in the first embodiment, the first support 4 and the second support 5 perform a function as one firm support only after the top end surfaces of the first support 4 and the second support 5 make an approximately face-to-face contact with each other. Accordingly, even if part of the top end of the coupling protrusion 9 is inside the coupling hole 8 before the fuel tank T is corrected, when the top end surfaces of the first support 4 and the second support 5 are spaced apart from each other by the gap L, the first support 4 and the second support 5 do not function as one support with a given rigidity and thus regarded as being in the "pre-coupled" state.

### <Second Embodiment>

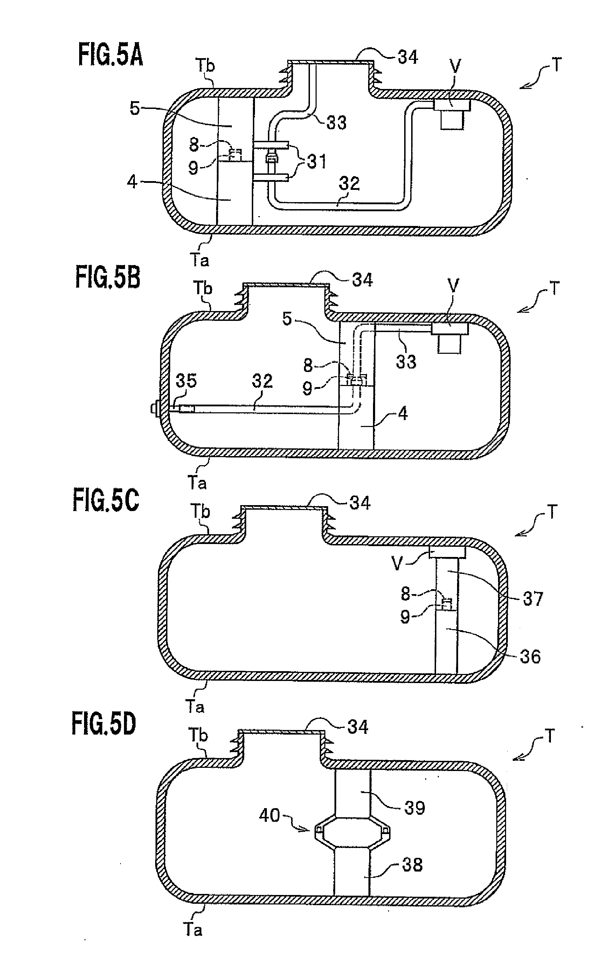

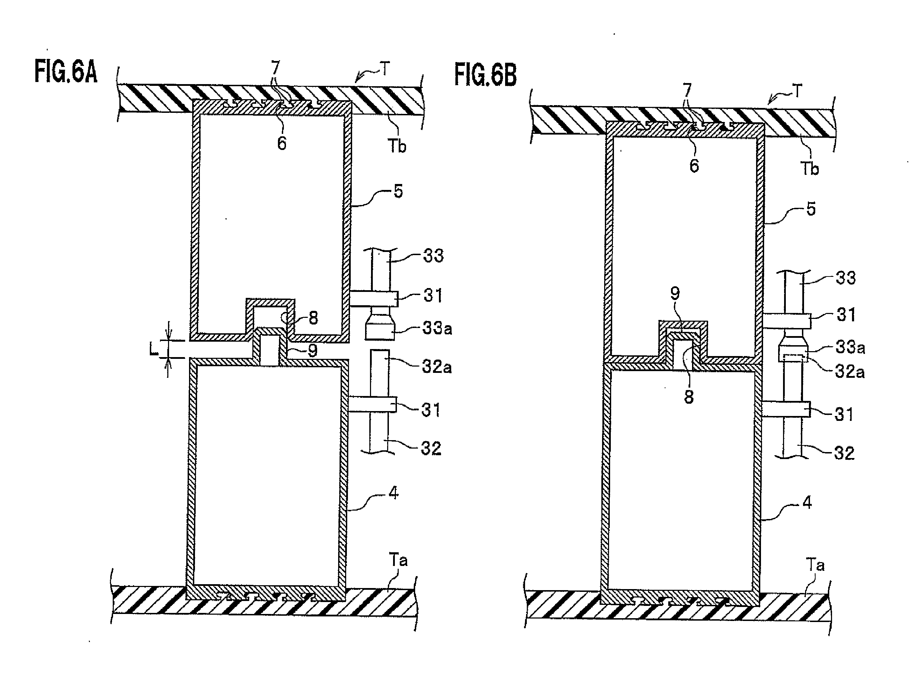

FIGs. 5A, 6A and 6B are schematic diagrams showing the second embodiment. FIG. 5A is a side view of the entirety of the hollow container with the built-in components in the coupled state. FIGs. 6A and 6B are side views of parts of the hollow container with the built-in components, which are in the pre-coupled state and in the coupled state, respectively, according to the second embodiment. In FIGs. 5A, 6A and 6B, the same components as those in the first embodiment are signified by the same References, and descriptions thereof are omitted. The second embodiment is the same as the first embodiment in that the first built-in component 2 and the second built-in component 3 are constituted of the first support 4 and the second support 5, respectively, and that the first support 4 and the second support 5 are coupled to erect vertically across the distance between the lower surface part Ta and the upper surface part Tb of the fuel tank T.

In the second embodiment, when the first support 4 and the second support 5 are coupled, a pair of tubes are coupled for communication with each other. The first support 4 and the second support 5 each have a side surface with a tube holding stay 31 fixed thereto. The tube holding stay 31 of the first support 4 holds a portion of a first tube 32 that is near an upwardly open end thereof. The tube holding stay 31 of the second support 5 holds a portion of a second tube 33 that is near a downwardly open end thereof. The open end of the first tube 32 is formed as a male mouthpiece 32a and the open end of the second tube 33 is formed as a female mouthpiece 33a.

Before the fuel tank T is corrected, as shown in FIG. 6A, the first support 4 and the second support 5 are in the pre-coupled state, and the first tube 32 and the second tube 33 are not communicated. When the first support 4 and the second support 5 are coupled by the correction of the fuel tank T, as shown in FIG. 6B, the male mouthpiece 32a fits in the female mouthpiece 33a, so that the first tube 32 and the second tube 33 are communicated with each other. There is no particular limitation on the connection structures of other ends of the first tube 32 and the second tube 33. For example, after the built-in components coupling step, as shown in FIG. 5A, the other end of the first tube 32 is manually connected to a valve V, whereas the other end of the second tube 33 is manually connected to an apparatus or piping, not shown, around a predetermined opening 34 of the fuel tank T. Examples of the valve V include a cut valve and the like.

According to the second embodiment, various tubes laid inside the fuel tank T can be supportedly fixed to the first support 4 and the second support 5.

### <Third Embodiment>

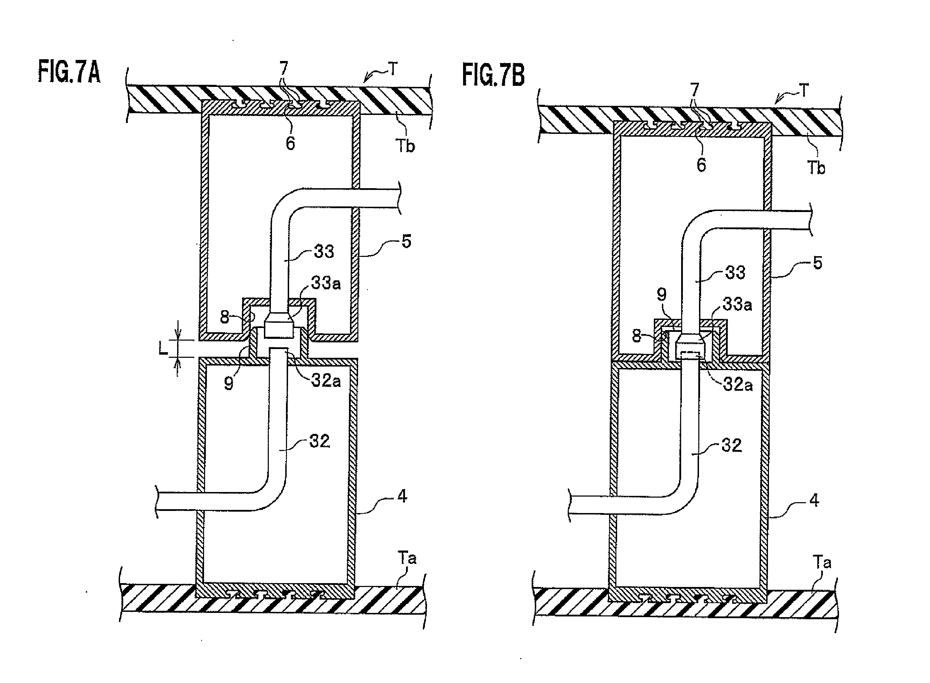

FIGs. 5B, 7A and 7B are schematic diagrams showing the third embodiment. FIG. 5B is a side view of the entirety of the hollow container with the built-in components in the coupled state. FIGs. 7A and 7B are side views of parts of the hollow container with the built-in components, which are in the pre-coupled state and in the coupled state, respectively, according to the third embodiment. In FIGs. 5B, 7A and 7B, the same components as those in the second embodiment are signified by the same References, and descriptions thereof are omitted. The third embodiment is the same as the second embodiment in that the first built-in component 2 and the second built-in component 3 are constituted of the first support 4 and the second support 5, respectively; and that the first support 4 and the second support 5 are coupled to erect vertically across the distance between the lower surface part Ta and the upper surface part Tb of the fuel tank T; and that when the first support 4 and the second support 5 are coupled, the pair of tubes are coupled for communication with each other.

In the second embodiment, each of the tube holding stays 31 holds the portion of the first tube 32 that is near the upwardly open end thereof and the portion of the second tube 33 that is near the downwardly open end thereof that are located outside the first support 4 and the second support 5. In the third embodiment, the portion of the first tube 32 that is near the upwardly open end thereof and the portion of the second tube 33 that is near the downwardly open end thereof are located inside the first support 4 and the second support 5. More specifically, the first tube 32 extends through the side wall of the first support 4 to the end provided inside the coupling protrusion 9. The coupling protrusion 9 is upwardly opened. On the other hand, the second tube 33 extends through the side wall of the second support 5 to the end inside the coupling hole 8.

Before the fuel tank T is corrected, as shown in FIG. 7A, the first support 4 and the second support 5 are in the pre-coupled state, and the first tube 32 and the second tube 33 are not communicated. When the first support 4 and the second support 5 are coupled by the correction of the fuel tank T, as shown in FIG. 7B, the male mouthpiece 32a fits in the female mouthpiece 33a, so that the first tube 32 and the second tube 33 are communicated with each other. There is no particular limitation on the connection structures of other ends of the first tube 32 and the second tube 33. For example, after the built-in components coupling step, as shown in FIG. 5B, the other end of the first tube 32 is manually connected to a predetermined opening 35 of the fuel tank T while the other end of the second tube 33 is manually connected to the valve V.

### <Fourth Embodiment>

FIG. 5C is a side view of the entirety of the hollow container with the built-in components in the coupled state in the fourth embodiment. In the fourth embodiment, the second built-in component 3 is provided with the valve V. A first support 36 constitutes the first built-in component 2. A second support 37 constitutes the second built-in component 3. The first support 36 and the second support 37 are coupled to erect vertically across the distance between a lower surface part Ta and an upper surface part Tb of the fuel tank T. The second support 37 has the valve V. The valve V may be provided directly inside the second support 37 or inside a casing for the valve V. If the valve V is provided inside the casing, the casing may be incorporated into the second support 37 that constitutes the second built-in component 3.

According to the fourth embodiment, the first support 36 and the second support 37 serve to prevent shrink deformation of the fuel tank T and also to reduce inclination of the valve V relative to the wall of the fuel tank T. As a result, the valve V stably opens and closes.

It is possible to incorporate, as well as the valve V, a fuel pump, a canister and the like into either one or each of the first support 36 and the second support 37. Further, one support may be directly connected to the valve V, the fuel pump, the canister or the like. In such a case, the valve, the fuel pump, the canister or the like serves as one of the built-in components, while the support serves as the other built-in component.

### <Fifth Embodiment>

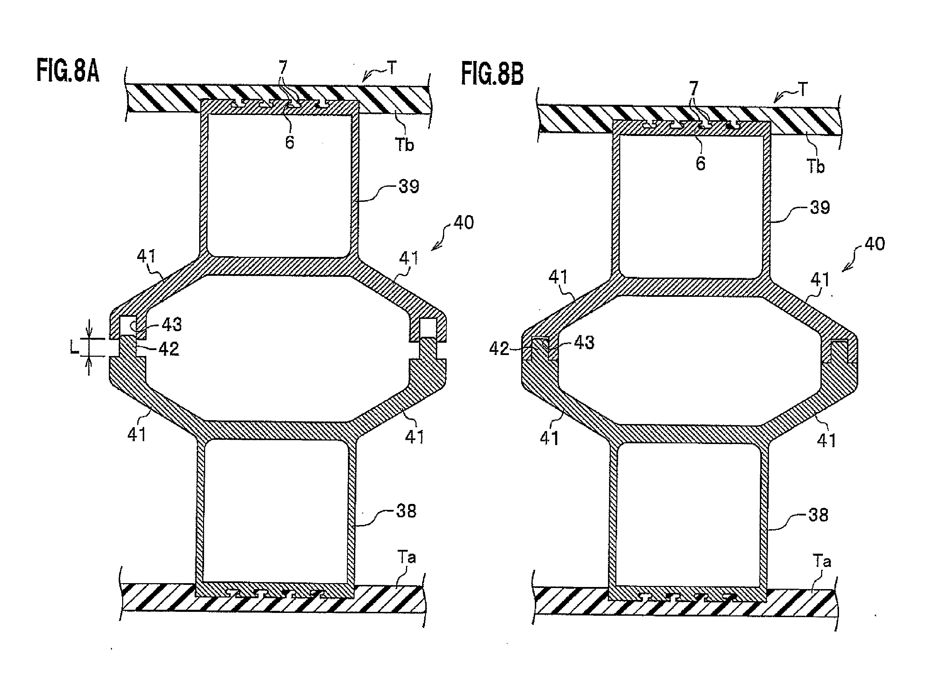

FIGs. 5D, 8A and 8B are schematic diagrams showing the fifth embodiment. FIG. 5D is a side view of the entirety of the hollow container with the built-in components in the coupled state. FIGs. 8A and 8B are side views of parts of the hollow container with the built-in components, which are in the pre-coupled state and in the coupled state, respectively, according to the fifth embodiment. In the fifth embodiment, by coupling the first built-in components 2 and the second built-in components 3, a support with a damper function is formed across the distance between the lower surface part Ta and the upper surface part Tb of the fuel tank T.

The first built-in component 2 is constituted of a first support 38. The first support 38 has a pair of damper arms 41 at a top end thereof. The pair of damper arms 41 extend in diagonally upward directions. The second built-in component 3 is constituted of a second support 39. The second support 39 has a pair of damper arms 41 at a bottom end thereof. The pair of damper arms 41 extend in diagonally downward directions. The damper arms 41 in opposite positions have top end surfaces with a coupling means. The coupling means is constituted of, for example, a projection and a recess. In FIGs. 8A and 8B, coupling holes 43 are formed in the top end surfaces of the damper arms 41 of the second support 39, and the coupling protrusions 42 are formed on the top end surfaces of the damper arms 41 of the first support 38. The coupling protrusions 42 fit in the coupling holes 43.

Before the fuel tank T is corrected, as shown in FIG. 8A, the top end surfaces of the damper arms 41 in opposite positions are spaced apart from each other by the gap L, and the first support 38 and the second support 39 are in the pre-coupled state. Due to the correction of the fuel tank T, as shown in FIG. 8B, the coupling protrusions 42 fit in the coupling holes 43 to cause the top end surfaces of the damper arms 41 to make an approximately face-to-face contact with each other and thereby reduce the gap L to approximately zero. Thus, the first support 38 and the second support 39 are coupled. As a result, the support with a damper 40 is formed across the distance between the lower surface part Ta and the upper surface part Tb of the fuel tank T. The damper 40 has an approximately rhombus frame-like shape. Because the support has the damper 40, in the event that an external force is suddenly applied to the fuel tank T, the external force is buffered to prevent sudden shrink deformation of the fuel tank T.

### <Sixth Embodiment>

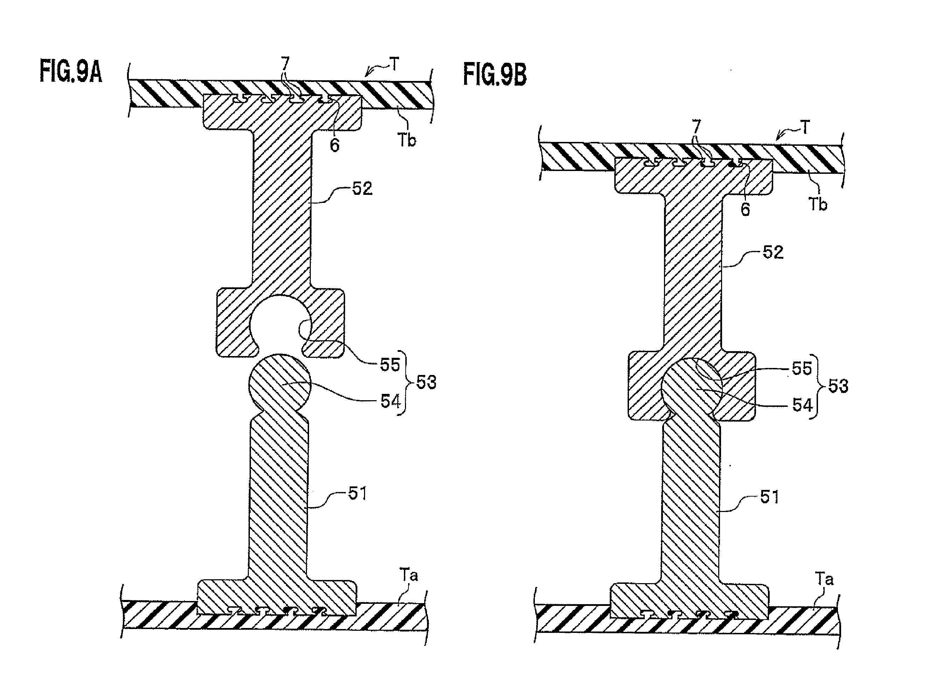

FIGs. 9A and 9B are schematic diagrams showing the sixth embodiment. FIGS. 9A and 9B are side views of parts of the hollow container with the built-in components, which are in the pre-coupled state and in the coupled state, respectively, according to a sixth embodiment. In the sixth embodiment, an engagement means 53 is provided. The engagement means 53 is for positioning the first built-in component 2 and the second built-in component 3 relative to each other and engaging the first built-in component 2 and the second built-in component 3 with each other, with elastic deformation of at least one of the first built-in component 2 and the second built-in component 3, and preventing the first built-in component 2 and the second built-in component 3 from moving closer to each other and moving more apart from each other. A second support 52 serves as the second built-in component 3. The first support 51 has a top end formed with a spherical engagement projection 54. The second support 52 has a top end formed with an engagement recess 55. The engagement recess 55 has a spherical space with a narrow entrance. The engagement means 53 is constituted of the engagement projection 54 and the engagement recess 55.

Before the fuel tank T is corrected, as shown in FIG. 9A, the engagement projection 54 and the engagement recess 55 are not engaged, and the first support 51 and the second support 52 are in the pre-coupled state. In the correction of the fuel tank T, the engagement projection 54 presses the peripheral area of the entrance of the engagement recess 55 to enlarge the diameter of the entrance of the engagement recess 55 with elastic deformation. As a result, as shown in FIG. 9B, the engagement projection 54 is engaged with the engagement recess 55, so that the first support 51 and the second support 52 are coupled. Consequently, the first support 51 and the second support 52 are positioned and engaged and prevented from moving closer to each other and moving more apart from each other. This prevents shrink deformation of the fuel tank T (deformation defined as a decrease in the distance between the lower surface part Ta and the upper surface part Tb) and also expansion deformation of the fuel tank T (deformation defined as an increase in the distance between the lower surface part Ta and the upper surface part Tb).

In addition, the engagement recess 55 may be formed in the first support 51 and the engagement projection 54 may be formed on the second support 52.

### <Seventh Embodiment>

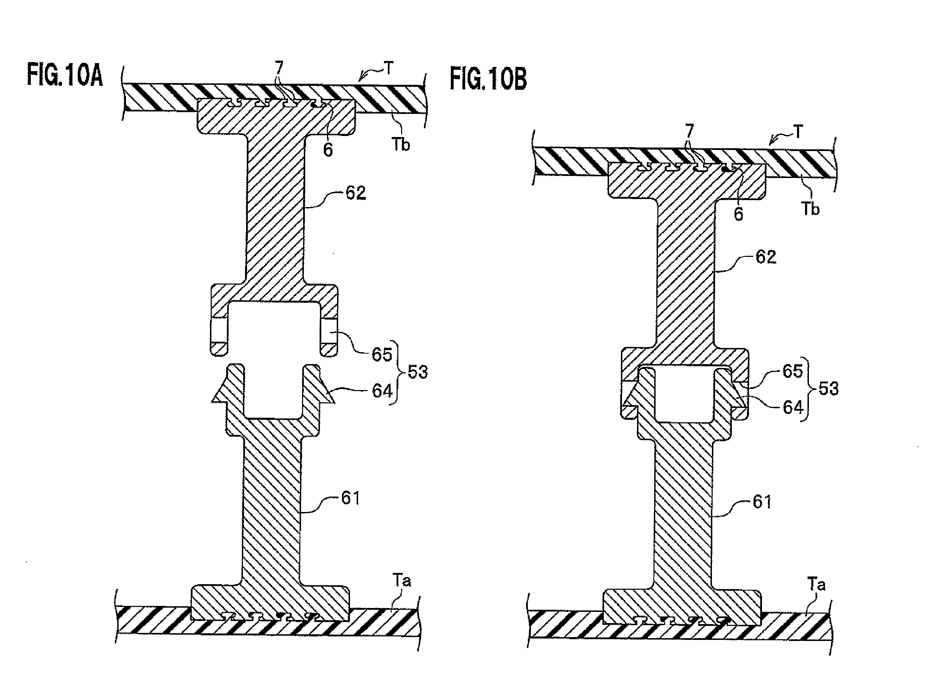

FIGs. 10A and 10B are schematic diagrams showing the seventh embodiment. FIGs. 10A and 10B side views of parts of the hollow container with the built-in components, which are in the pre-coupled state and in the coupled state, respectively, according to a seventh embodiment. In the seventh embodiment as well, the engagement means 53 is provided for positioning and engaging the first built-in component 2 and the second built-in component 3 with elastic deformation of at least one of the first built-in component 2 and the second built-in component 3 and preventing the first built-in component 2 and the second built-in component 3 from moving closer to each other and moving more apart from each other. In the sixth embodiment, the engagement means 53 is constituted of the spherical engagement projection 54 and the engagement recess 55 that has a spherical space. In the seventh embodiment, the engagement means 53 is constituted of engagement hooks 64 and engagement holes 65. A first support 61 serves as the first built-in component 2. A second support 62 serves as the second built-in component 3. The first support 61 has a top end portion with engagement hooks 64 projecting around the side surface thereof. The second support 62 has a top end portion with engagement holes 65 formed through the side surface thereof.

Before the fuel tank T is corrected, as shown in FIG. 10A, the engagement hooks 64 and the engagement holes 65 are not engaged with each other, and the first support 61 and the second support 62 are in the pre-coupled state. In the correction of the fuel tank T, the diameter of the top end portion of the first support 61 is shrunk with elastic deformation and that of the top end portion of the second support 62 is enlarged with elastic deformation. As a result, as shown in FIG. 10B, the engagement hooks 64 are engaged with the engagement holes 65, so that the first support 61 and the second support 62 are coupled. Consequently, the first support 61 and the second support 62 are positioned and engaged and prevented from moving closer to each other and moving more apart from each other. This prevents shrink deformation of the fuel tank T (deformation defined as a decrease in the distance between the lower surface part Ta and the upper surface part Tb) and also expansion deformation of the fuel tank T (deformation defmed as an increase in the distance between the lower surface part Ta and the upper surface part Tb).

The engagement holes 65 may be formed through the first support 61 and the engagement hooks 64 may be formed on the second support 62.

The engagement means 53 is for positioning and engaging the first built-in component 2 and the second built-in component 3 with elastic deformation of at least one of the first built-in component 2 and the second built-in component 3 and preventing the first built-in component 2 and the second built-in component 3 from moving closer to each other and moving more apart from each other. The engagement means 53 is also applicable not only to a mode in which the tubes are communicated with each other as in the second embodiment and the third embodiment but also to a mode in which the valve V or the like is incorporated in the first built-in component 2 or the second built-in component 3 as in the fourth embodiment and to a mode in which the support with the damper function is formed as in the fifth embodiment.

In the above, the preferred embodiments of the present invention have been described. The first built-in component 2 and the second built-in component 3 serving as the built-in components are not limited to those described in the first embodiment to seventh embodiment but may be any that is built in the hollow container 1.

The method of the present invention can realize a reduction in irregularities at the wall of the container and inclination of the built-in components that occur during the coupling of the built-in components.

The embodiments of the present invention have been explained as aforementioned. However, the embodiment of the present invention is not limited to those explanations, and those skilled in the art ascertain the essential characteristics of the present invention and can make the various modifications and variations to the present invention to adapt it to various usages and conditions without departing from the spirit and scope of the invention.

## Claims

1. A method for coupling built-in components in a hollow container, comprising:
a hollow container forming step of forming the hollow container, the hollow container forming step including securing the built-in components to parisons transferred onto mold pieces and closing the mold pieces with the built-in components in a pre-in the pre-coupled state state; and
a built-in components coupling step of coupling the built-in components, the built-in components coupling step including pressing an outer surface of the hollow container to displace the hollow container while cooling the hollow container after removing the hollow container from the mold pieces.

2. The method of Claim 1, wherein in the built-in components coupling step, a correction jig is prepared, the correction jig including a lower jig and a upper jig, the lower jig being for placing the hollow container thereon, the upper jig being movable up and down and having a pressing portion for pressing the outer surface of the hollow container,
the built-in components coupling step further including:
placing the hollow container on the lower jig with the built-in components located at an upper surface part and a lower surface part of the hollow container; and
then bringing the upper jig and the lower jig into proximity with each other to cause the pressing portions to press only an area of the upper surface part of the hollow container for correcting the hollow container, the upper surface part area being a bearing surface to which the built-in component is secured and a surrounding area thereof.

3. The method of Claim 1, wherein a pair of tubes are coupled for communication with each other when the built-in components are coupled during the built-in components coupling step.

4. The method of Claim 2, wherein a pair of tubes are coupled for communication with each other when the built-in components are coupled during the built-in components coupling step.
